# EUROPEAN PATENT SPECIFICATION

(11) **EP 2 679 925 B1**
(45) Date of publication and mention of the grant of the patent: **08.04.2020**
(21) Application number: 11859123.9
(22) Date of filing: 21.02.2011
(51) Int. Cl.: F24F 11/30, F24F 11/62, F24F 11/54

(54) **AIR CONDITIONING APPARATUS AND AIR CONDITIONING SYSTEM**
KLIMATISIERUNGSVORRICHTUNG UND KLIMAANLAGE
APPAREIL DE CONDITIONNEMENT D'AIR ET SYSTÈME DE CONDITIONNEMENT D'AIR

(43) Date of publication of application: 01.01.2014
(73) Proprietor: Mitsubishi Electric Corporation, Tokyo 100-8310 (JP)
(72) Inventor: MUKAI Takuya, Tokyo 100-8310 (JP); KOIZUMI Yoshiaki, Tokyo 100-8310 (JP); HIGUMA Toshiyasu, Tokyo 100-8310 (JP); ENDO Satoshi, Tokyo 100-8310 (JP)
(74) Representative: Pfenning, Meinig & Partner mbB
(86) International application number: PCT/JP2011/053657
(87) International publication number: WO 2012/114421

(56) References cited:
- EP-A2- 2 042 818
- WO-A1-2004/114543
- JP-A- 6 018 078
- JP-A- H0 395 346
- JP-A- 2005 201 504
- JP-B2- 2 948 502
- US-A1- 2005 188 706
- US-B1- 6 290 141

## Description

### Technical Field

This invention relates to air conditioning apparatuses, such as an outdoor unit and an indoor unit, that are able to communicate with each other, and an air conditioning system that includes an outdoor unit and at least one indoor unit.

### Background Art

A multi-type air conditioner (an air conditioning system) is disclosed in which one three-wire cable, that is a triplex cable, connects an outdoor unit to each of a plurality of indoor units (see, for example, Patent Literature 1). The triplex cable includes a power wire, a communication wire and a shared wire for power and communication (also collectively called indoor and outdoor wires). The outdoor unit and each of the indoor units transmit and receive a voltage signal based on the potential difference between the communication wire and the shared wire of the triplex cable to communicate with each other, and they receive AC power via the power wire and the shared wire to perform air conditioning.

This use of the triplex cable simplifies and avoids laying a dedicated communication wire separately.

In such a system using the triplex cable, a measure to prevent miswiring of the cable is essential. In the air conditioning system disclosed in the above Patent Literature 1, a communication circuit in the outdoor unit and each of the indoor units includes a high-voltage photo coupler. With the photo coupler, the communication circuit can be produced at low cost.

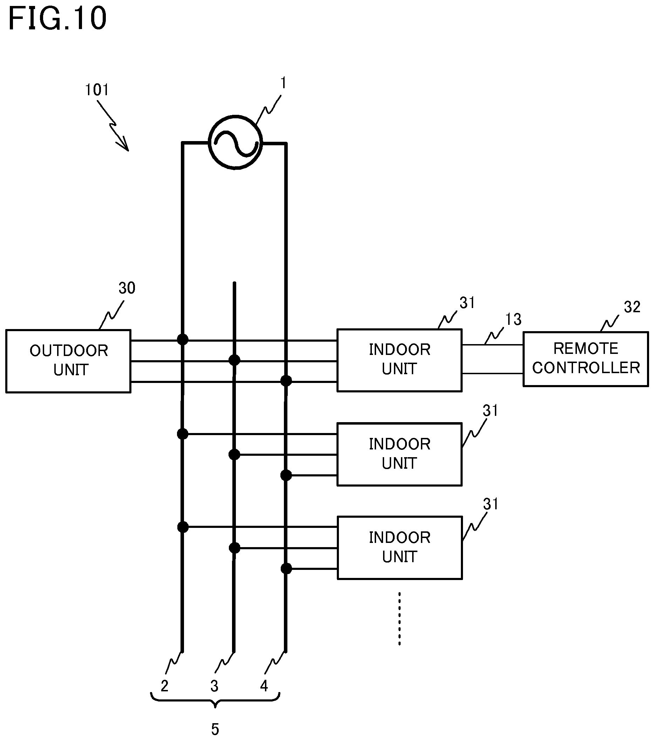

FIG. 10 illustrates a schematic configuration of a conventional air conditioning system 101 that uses a triplex cable. As illustrated in FIG. 10, a power wire 2 and a shared wire for power and communication (a shared wire) 4, which are connected to an alternating-current power source (AC power source) 1, and a communication wire 3 are integrated into one triplex cable 5.

To this triplex cable 5 are connected, in parallel, an outdoor unit 30 and a plurality of indoor units 31.

To one of the indoor units 31 is connected a remote controller 32 via a remote control wire 13, which is a duplex cable. The remote control 32 is directly connected to only one of the indoor units for simplifying laying work. The remote controller 32 communicates with the indoor unit 31 via the duplex remote controller wire 13. The remote controller 32 may have a built-in DC power source for operation or may receive DC power from the indoor unit 31.

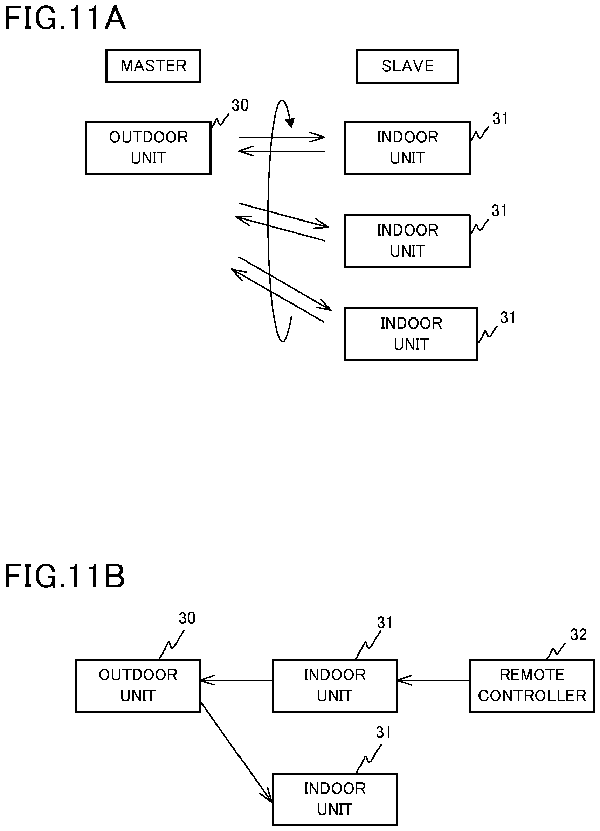

Due to configurational restriction of the communication circuit such as use of a high-voltage photo coupler, communication between the outdoor unit 30 and each of the indoor units 31 is performed, for example, according to the procedure illustrated in FIG. 11A. As illustrated in FIG. 11A, in this communication procedure, the communication master is the outdoor unit 30, and the indoor units 31 are slaves. As a modulation system (serial transmission system) of data to be transmitted, various systems are used, such as a baseband system, for example, an AMI (Alternate Mark Inversion) code, an NRZ (Non Return to Zero) code and a Manchester code.

More specifically, communication is always performed in the form of a response of the indoor unit 31 to a request from the outdoor unit 30, that is, in the form of polling from the outdoor unit 30. The outdoor unit 30 performs polling for each of the indoor units 31 in a predetermined order. This polling is repeated.

If the indoor units 31 communicate with each other, the outdoor unit 30 relays the communication. An indoor unit 31 transmits transmission data for another indoor unit 31 to the outdoor unit 30 in the form of a response to a request from the outdoor unit 30. The outdoor unit 30 transmits a request to the other indoor unit 31 that is the destination, the request including the transmission data included in the response.

FIG. 11B illustrates a path of data to be transmitted from the remote controller 32 to an indoor unit 31 that is not directly connected to the remote controller 32. As illustrated in FIG. 11B, data transmitted from the remote controller 32 reaches a destination indoor unit 31 via an indoor unit 31 directly connected to the remote controller 32 and the outdoor unit 30.

EP 2042818 A2 discloses that in an air conditioning system, an indoor unit has at least one of a first communication circuit for performing communications through two communication lines independent of power supply lines and a second communication circuit for performing communications through one of the power supply lines and one communication line independent of the power supply lines, and an outdoor unit has a third communication circuit that is connected to the indoor unit to communicate with one of the first communication circuit and the second communication circuit, and a switch for connecting one of communication terminals of the third communication circuit to one of the power supply lines when the third communication circuit is connected to the second communication circuit, and releasing the connection concerned when the third communication circuit is connected to the first communication circuit.

US 2005/188706 A1 discloses that an air conditioner for conducting communication through a power line includes a bridge unit connected to at least an outdoor unit through a transmission line, and at least an indoor unit connected from the power line through a blocking filter. A side of the bridge unit far from the outdoor unit is connected between the blocking filter and the indoor unit. The bridge unit subjects a signal from the outdoor unit to spread spectrum modulation and transmits it by superposing the resulting signal on the power line. The superposed signal is received and demodulated by the indoor unit.

### Citation List

### Patent Literature

Patent Literature 1: Japanese Patent No. 2948502

### Summary of Invention

### Technical Problem

In this way, in a conventional air conditioning system, communication between an outdoor unit and an indoor unit is performed by polling from the outdoor unit. Therefore, an indoor unit cannot transmit data to the outdoor unit before the indoor unit has a polling turn. Thus, it is difficult for an indoor unit to quickly notify the outdoor unit of, for example, a failure of the indoor unit, depending on timing.

Communication between indoor units and communication between a remote controller and an indoor unit are always performed via the outdoor unit, which at least doubles the communication volume and increases communication traffic, thereby increasing time until completion of communication.

In a conventional air conditioning system, such a background makes it difficult to realize cooperative control of a plurality of indoor units.

In addition, in the conventional air conditioning system, if a remote controller is used to operate an indoor unit that is not directly connected to the remote controller, the path for operation command data to be transmitted from the remote controller to the indoor unit is long, which takes time until the operation command has reached the indoor unit. Therefore, there is an inconvenience of a slow response speed of the system. For example, the indoor unit starts its operation in a few seconds after pressing a power button.

The present invention was made in view of the above circumstance, and has an objective to provide an air conditioning apparatus and an air conditioning system that still use one triplex cable to perform supply of AC power and data communication and also permit rapid communication between air conditioning apparatuses.

### Solution to Problem

In order to achieve the above objective, an air conditioning apparatus according to the present invention is connected to a triplex cable that includes a power wire, a communication wire and a shared wire for power and communication, and includes a modulator, a demodulator, a connector and a controller. The modulator modulates a voltage signal corresponding to inputted transmission data and outputs the signal as a voltage signal between the communication wire and the shared wire for power and communication. The demodulator demodulates a voltage signal based on the potential difference between the communication wire and the shared wire for power and communication and outputs the signal as a demodulated signal. The connector comprises a high-voltage capacitor and connects the communication wire and the shared wire for power and communication to the modulator and the demodulator via the high-voltage capacitor that withstands voltages up to a predetermined level. The controller receives, as incoming data, serial data corresponding to a voltage signal demodulated in the demodulator if the serial data includes an address of the air conditioning apparatus, monitors a demodulated signal outputted from the demodulator; and outputs the transmission data that includes a destination address to the modulator if the controller determines that no signal is being transmitted through the communication wire.

### Advantageous Effects of Invention

In the present invention, the connector connects the modulator and demodulator to the communication wire and shared wire for power and communication via a high-voltage capacitor. This prevents the failure of the apparatus due to miswiring of the triplex cable.

Further, the controller monitors a signal demodulated in the demodulator, transmits transmission data that includes a destination address via the communication wire or the like while a signal is not being transmitted through the communication wire, and receives incoming data corresponding a signal transmitted through the communication wire if the incoming data includes the address of an apparatus to which the controller belongs. This permits one-on-one communication between air conditioning apparatuses without a relay unit. As a result, in a connection configuration in which supply of AC power and data communication are performed with the use of one triplex cable, fast communication can be performed.

### Brief Description of Drawings

FIG. 1 is a block diagram illustrating a schematic configuration of an air conditioning system according to Embodiment 1 of the present invention;
FIG. 2 is a block diagram illustrating a detailed configuration of the air conditioning apparatus in FIG. 1;
FIG. 3A is transmission data before modulation; FIG. 3B is a modulated signal; FIG. 3C is incoming data after demodulation;
FIGS. 4A and 4B are circuit diagrams of a connector in FIG. 2;
FIG. 5 is a diagram for explaining communication operation of the air conditioning system in FIG. 1;
FIG. 6 is a block diagram illustrating a schematic configuration of an air conditioning system according to Embodiment 2 of the present invention;
FIGS. 7A and 7B are circuit diagrams of a remote controller wire connector in FIG. 6;
FIG. 8 is a block diagram illustrating a schematic configuration of a remote controller;
FIG. 9 is a block diagram illustrating a schematic configuration of an air conditioning system according to Embodiment 3 of the present invention;
FIG. 10 is a block diagram illustrating a schematic configuration of a conventional air conditioning system;
FIG. 11A is a diagram illustrating communication procedure of a conventional air conditioning system; and FIG. 11B is a diagram for explaining a path of data transmitted from a remote controller.

### Description of Embodiments

Embodiments of the present invention will be described in detail with reference to drawings.

### Embodiment 1

Embodiment 1 of the present invention will be described.

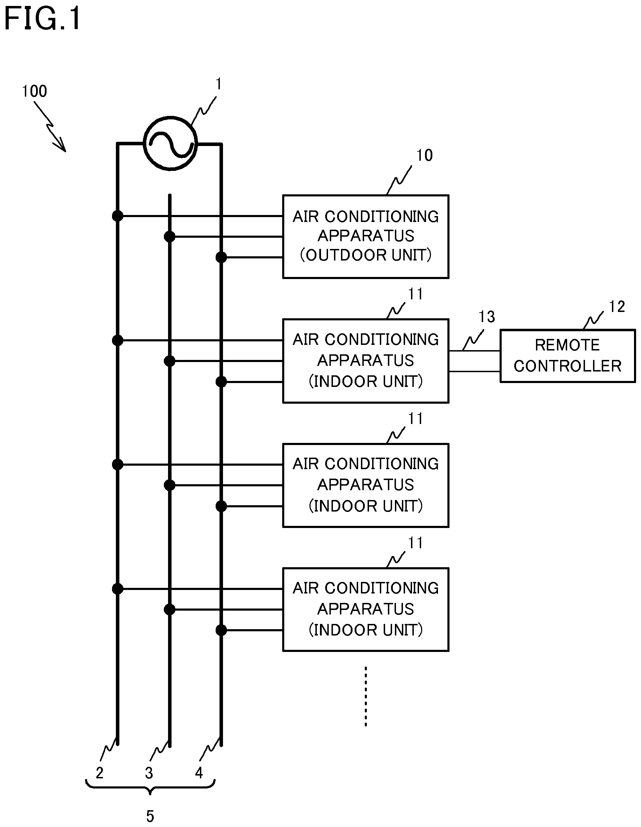

FIG. 1 illustrates a schematic configuration of an air conditioning system 100 in the present embodiment. As illustrated in FIG. 1, the air conditioning system 100 includes an AC power source 1, a triplex cable 5, an air conditioning apparatus (outdoor unit) 10, air conditioning apparatuses (indoor units) 11 and a remote controller 12.

The triplex cable 5 includes a power wire 2, a communication wire 3 and a shared wire 4. The power wire 2 and shared wire 4 are connected to the AC power source 1. The AC power source 1 is, for example, a commercial power source of 200 V.

The air conditioning apparatus (outdoor unit) 10 and air conditioning apparatuses (indoor units) 11 are connected to the power wire 2, communication wire 3 and shared wire 4 that are included in the triplex cable 5. This use of the triplex cable 5 simplifies laying work of the cable in installation.

A plurality of air conditioning apparatuses (indoor units) 11 are connected to the triplex cable 5. The remote controller 12 is connected via a duplex remote controller wire 13 to any one of the air conditioning apparatuses (indoor units) 11.

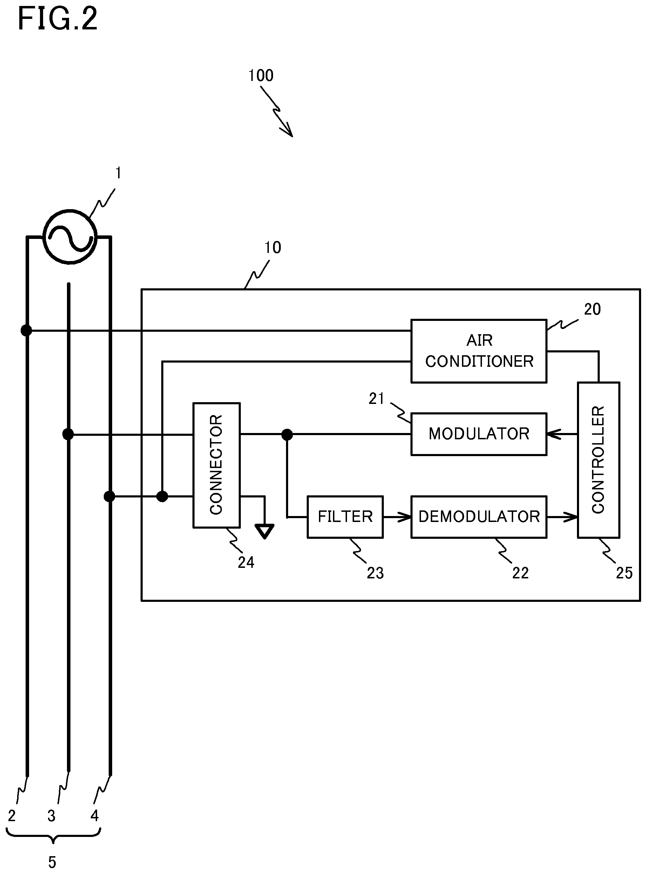

FIG. 2 illustrates an internal configuration of the air conditioning apparatus (outdoor unit) 10. As illustrated in FIG. 2, the air conditioning apparatus (outdoor unit) 10 includes an air conditioner 20, a modulator 21, a demodulator 22, a filter 23, a connector 24 and a controller 25.

The air conditioner 20 is connected to the power wire 2 and shared wire 4. To the air conditioner 20 power is supplied from the AC power source 1 via the power wire 2 and shared wire 4. The air conditioner 20 is operated by the supplied power to perform air conditioning such as refrigerant circulation under control of the controller 25.

The modulator 21 modulates a voltage signal corresponding to serial transmission data inputted from the controller 25 in a modulated-carrier system to generate a modulated signal. The modulator 21 outputs the generated modulated signal as a voltage signal between the communication wire 3 and the shared wire 4 via the connector 24.

The demodulator 22 demodulates a voltage signal based on the potential difference between the communication wire 3 and the shared wire 4 in a modulated-carrier system to generate a demodulated signal. The demodulator 22 outputs the generated demodulated signal to the controller 25.

The filter 23 is a high-pass filter that allows only components in a frequency band near a carrier pass through and blocks low-pass power line harmonics and/or the like, of components of the voltage signal that is based on the potential difference between the communication wire 3 and the shared wire 4 and is inputted via the connector 24. Alternatively, the filter 23 may be a band-pass filter.

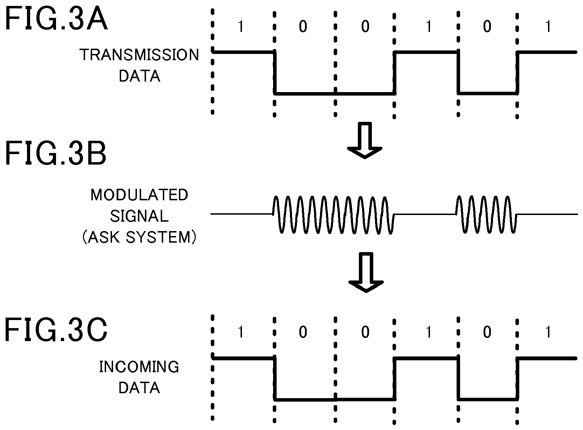

FIG. 3A illustrates transmission data before demodulation that is outputted from the controller 25. As illustrated in FIG. 3A, the transmission data is serial bit string data that indicates a value 0 or 1. The modulator 21 modulates a voltage signal corresponding to such transmission data, for example.

FIG. 3B illustrates a modulated signal generated in such a way that the modulator 21 modulates a voltage signal corresponding to the transmission data in FIG. 3A. As illustrated in FIG. 3B, the modulator 21 modulates the signal in ASK (Amplitude-Shift Keying) system.

However, modulation is not limited to the ASK system, for FSK (Frequency Shift Keying) modulation system or PSK (Phase-Shift Keying) modulation system may be employed. Employment of the ASK system simplifies the circuit configuration of the modulator 21, reducing the cost of the modulator. Meanwhile, employment of the PSK system improves noise resistance. Various digital modulation systems can be also employed.

As illustrated in FIG. 3B, a modulated signal that is transmitted through the communication wire 3 is not a signal, such as a baseband signal (square wave), that contains extremely-high-frequency components but a signal with a relatively low frequency band.

FIG. 3C illustrates incoming data generated in such a way that the modulated signal in FIG. 3B is demodulated in the demodulator 22. As illustrated in FIG. 3C, by demodulation by the demodulator 22, as incoming data, transmission data (serial bit string data) is restored before modulation in FIG. 3A.

In the air conditioning system 100 according to the present embodiment, as described above, power supply to the air conditioning apparatus (outdoor unit) 10 and each of the air conditioning apparatuses (indoor units) 11 as well as communication between the apparatuses are performed with the use of the triplex cable 5. The triplex cable 5 has a cable characteristic of a large line capacity. Therefore, both of the power wire 2 and the communication wire 3 easily generate noise (power line harmonics and harmonics of a communication signal).

If a baseband system is employed as a modulation system for the communication signal in the triplex cable 5, the communication signal itself has a lot of harmonics. As a result, noise emitted from the communication wire 3 is superimposed on AC voltage that flows through the power wire 2. Therefore, if the baseband system is employed as the modulation system, it is difficult to achieve a higher communication speed.

Meanwhile, in the present embodiment, a modulated-carrier system is employed as a modulation system. Employment of the modulated-carrier system lowers frequency components included in the communication signal that is transmitted through the communication wire 3, thereby reducing noise components that enter into the power wire 2.

Since harmonics of a communication signal are less superimposed on the power wire 2 in this way, design of circuits of the air conditioning apparatus (outdoor unit) 10 and air conditioning apparatus (indoor unit) 11 is easier, and communication is performed in a higher communication speed.

Moreover, in the present embodiment, the modulator 21 modulates a voltage signal and demodulator 22 demodulates a voltage signal with a higher frequency than that of harmonics of AC voltage of the AC power source 1 that is supplied via the power wire 2 and shared wire 4. This enables the filter 23 and connector 24 to remove noise components due to harmonic components of AC voltage, thereby achieving a high-quality demodulation.

Returning to FIG. 2, the connector 24 is connected to the communication wire 3 and shared wire 4. The connector 24 connects the communication wire 3 and shared wire 4 to the modulator 21, filter 23 and demodulator 22.

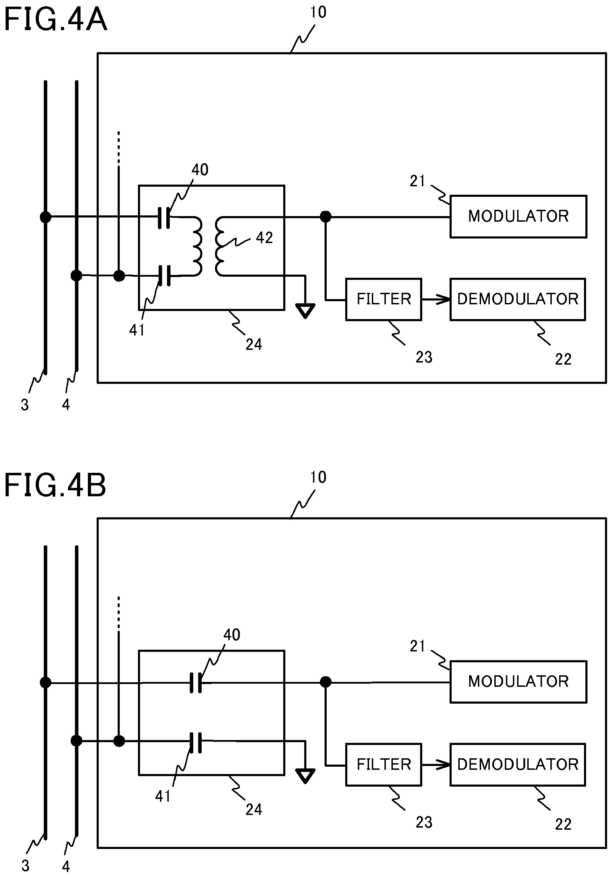

FIG. 4A illustrates a circuit configuration of the connector 24. As illustrated in FIG. 4A, the connector 24 includes capacitors 40, 41 and a transformer 42.

The capacitors 40, 41 are high-voltage capacitors that are able to withstand voltages up to 250 V, for example. The transformer 42 is also a high-voltage transformer that is able to withstand voltages up to 250 V, for example. A voltage of 250 V exceeds the maximum voltage of a common commercial AC power source. The voltage capacity of the capacitors 40, 41 and transformer 42 is not limited to 250 V, but it is sufficient that the capacitors 40, 41 and transformer 42 be able to receive the maximum voltage of the AC power source 1.

The capacitor 40 is disposed between the communication wire 3 and the modulator 21, filter 23 and demodulator 24. The capacitor 41 is disposed between the shared wire 4 and a grounding wire (ground). In the present embodiment, the capacitors 40, 41 make a capacitor connection.

Further, between the capacitors 40, 41 and the modulator 21 and demodulator 22 is disposed the transformer 42. One coil of the transformer 42 connects one end of the capacitor 40 and one end of the capacitor 41. The other coil of the transformer 42 connects the modulator 21 and demodulator 22 to the grounding wire.

Since the capacitors 40, 41 and transformer 42 are provided, the connector 24 is able to block AC voltage that enters through the shared wire 4 from that of the AC power source 1, and to allow only carrier components passing through. In addition, even if wires in the triplex cable 5 are wrongly wired or connected (for example, if the power wire 2 and communication wire 3 are mixed up and wrongly wired and connected), a circuit failure of the air conditioning apparatus (outdoor unit) 10 can be prevented.

Alternatively, the connector 24 may have a circuit configuration as illustrated in FIG. 4B. The circuit in FIG. 4B is different from the circuit in FIG. 4A in that the circuit in FIG. 4B does not include the transformer 42. Such a circuit configuration is also able to produce the above effects of the connector 24.

Returning to FIG. 2, the controller 25 includes a CPU and a memory (both not illustrated). The controller 25 integrally controls the air conditioning apparatus (outdoor unit) 10 by the CPU's executing a program stored in the memory. For example, the controller 25 controls the air conditioner 20. The controller 25 controls communication of control commands with the controller 25 of another air conditioning apparatus.

The controller 25 outputs to the modulator 21 a voltage signal corresponding to transmission data to be transmitted. The controller 25 also inputs incoming data corresponding to a voltage signal outputted from the demodulator 22.

In order to prevent collision of data communication on the communication wire 4, the controller 25 performs data communication in CSMA (Carrier Sense Multiple Access) system. The CSMA system is the system in which transmission is started after it is determined that there is no carrier indicating that transmission is being performed within the communication system (hereinafter referred to as carrier sense).

A unique address is assigned to each of the air conditioning apparatus (outdoor unit) 10 and air conditioning apparatuses (indoor units) 11 in a communication network composed of the communication wire 3 and shared wire 4. Transmission data transmitted from the controller 25 includes a destination address data at a predetermined position. This enables the controller 25 at the receiver's side to refer to address data included in incoming data after demodulation to determine whether the received incoming data's destination is an apparatus to which the controller 25 belongs. If the destination is for the apparatus, the controller 25 at the receiver's side finally receives the incoming data.

The controller 25 also monitors a demodulated signal outputted from the demodulator to determine whether a signal is being transmitted through the communication wire 3. If no signal has been transmitted for a predetermined period (for example, several tens of µ seconds), transmission data including a destination address is outputted to the modulator 21.

This employment of the CSMA system reduces the amount of traffic in communication and shortens response time in the whole system.

The configuration of the air conditioning apparatus (indoor unit) 11 is the same as the circuit configuration of the air conditioning apparatus (outdoor unit) 10 in FIGS. 2 and 3.

The remote controller 12 is connected to one of the indoor units 31 via the remote controller wire 13 that is a duplex cable. The remote controller 12 is directly connected to only one of the air conditioning apparatuses (indoor units) 11 for simplifying laying work. The remote controller 12 communicates with the air conditioning apparatus (indoor unit) 11 via the duplex remote controller wire 13. The remote controller 12 may have a built-in DC power source for operation or receive DC power from the air conditioning apparatus (indoor unit) 11.

The air conditioning apparatus (outdoor unit) 10 and each of the air conditioning apparatuses (indoor units) 11 have the above configuration, use power supplied from the power wire 2 or the like to make the air conditioner 20 perform air conditioning, and have one-on-one communication with another air conditioning apparatus under control of the controller 25.

Next, operation of the air conditioning system 100 according to the present embodiment will be described.

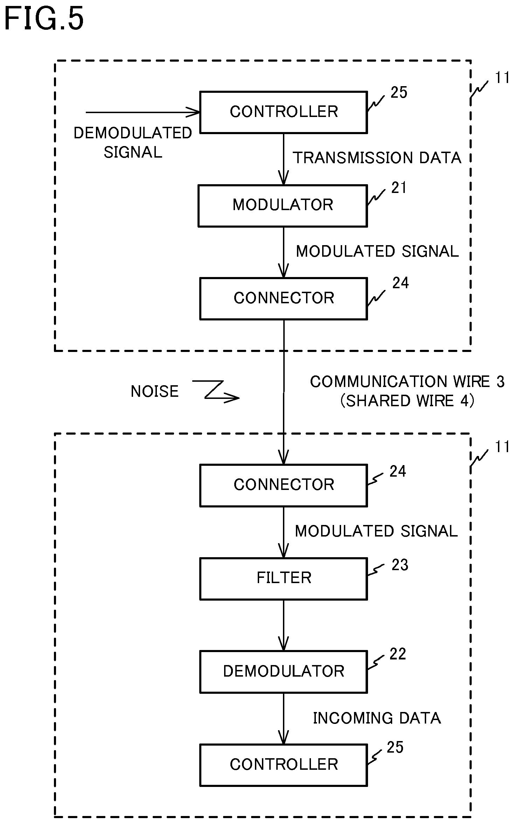

FIG. 5 illustrates communication between air conditioning apparatuses (indoor units) 11 in the air conditioning system 100. As illustrated in FIG. 5, a controller 25 of an air conditioning apparatus (indoor unit) 11 monitors a demodulated signal from a demodulator 22 for several tens of µ seconds, and if the controller 25 determines that no signal has been transmitted through a communication wire 3 for the several tens of µ seconds, the controller 25 outputs to a modulator 21 voltage signal corresponding to transmission data that includes destination address data.

The modulator 21 modulates the voltage signal in a modulated-carrier system (for example, ASK system). The modulated signal passes through a transformer 42 and capacitors 40, 41 of a connector 24 (the carrier frequency is sufficiently high), and is outputted to the communication wire 3 and a shared wire 4. While this signal is transmitted through the communication wire 3 and shared wire 4, noise (for example, noise that includes power line harmonics or the like from the power wire 2) is superimposed on the signal.

This signal is transmitted to another air conditioning apparatus (indoor unit) 11. A connector 24 of the other air conditioning apparatus (indoor unit) 11 outputs the transmitted signal to a filter 23. At this time, noise of power line harmonics (for example, noise around 50 Hz) is blocked by the connector 24, and only carrier components pass through the connector 24.

The filter 23 removes noise components due to power line harmonics from the inputted signal and outputs the resulting signal to a demodulator 22. The demodulator 22 demodulates the inputted signal and outputs the demodulated signal to a controller 25. Since the signal inputted to the demodulator 22 is a signal with a frequency band near a carrier, the demodulator 22 is able to demodulate a signal with a high quality.

The controller 25 determines whether serial data corresponding to the demodulated signal has the address of an apparatus to which the controller 25 belongs. If the demodulated signal has the address, the controller 25 receives the serial data as incoming data. This completes one-on-one communication between the apparatuses without a relay device.

As has been described in detail, in the present embodiment, the connector 24 uses the high-voltage capacitors 40, 41 and transformer 42 to connect the modulator 21 and demodulator 22 to the communication wire 3 and shared wire 4. This prevents a failure of the apparatus due to miswiring of the triplex cable 5.

Further, the controller 25 monitors a demodulated signal from the demodulator 22 to prevent collision of data communication on the communication wire 3, and while no signal is transmitted through the communication wire 3, transmission data is transmitted through the communication wire or the like. Further, the controller 25 receives incoming data if the address included in the incoming data corresponding to a signal transmitted through the communication wire 3 is the address of the apparatus to which the controller 25 belongs. This permits one-on-one communication between air conditioning apparatuses without a relay device. As a result, both of the supply of AC power and data communication can be achieved using the one triplex cable 5, and fast communication between the apparatuses can be also achieved.

In the present embodiment, the remote controller 12 is connected to an air conditioning apparatus (indoor unit) 11. Alternatively, like the air conditioning apparatus (outdoor unit) 10 and air conditioning apparatuses (indoor units) 11, the remote controller 12 itself may include the modulator 21, demodulator 22, filter 23, connector 24 and controller 25 and be directly connected to the triplex cable 5. In this case, the remote controller 12 requires therein a conversion circuit that converts AC voltage outputted from the AC power source 1 to a low DC power supply voltage to be used in the remote controller 12 and reduces voltage.

The present embodiment permits a direct communication between a plurality of air conditioning apparatuses without a bridge or a hub.

### Embodiment 2

Next, Embodiment 2 of the present invention will be described.

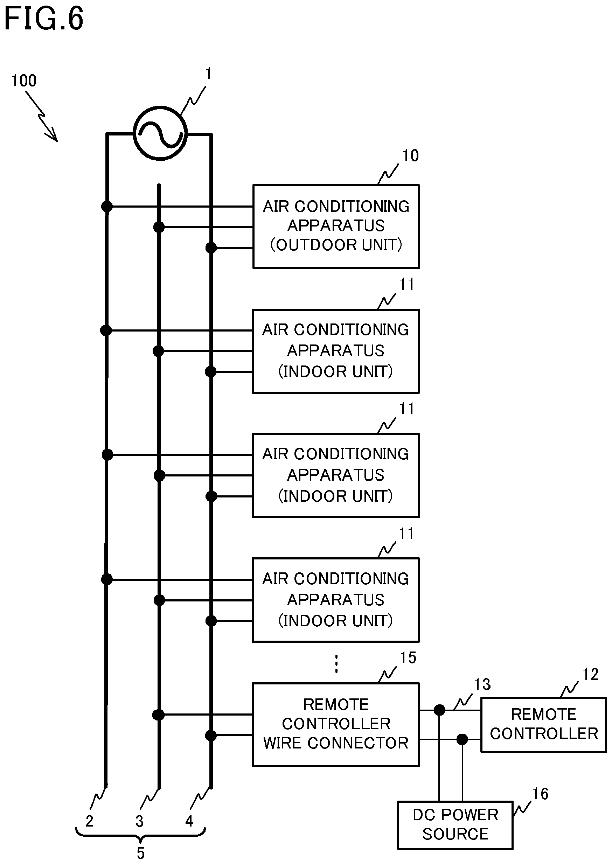

FIG. 6 illustrates a configuration of an air conditioning system 100 according to the present embodiment. As illustrated in FIG. 6, this air conditioning system 100 is different from Embodiment 1 in that the air conditioning 100 of the present embodiment further includes a remote controller wire connector 15 and a DC power source 16.

In the present embodiment, the remote controller 12 is connected to the remote controller wire connector 15 via the remote controller wire 13, instead of an air conditioning apparatus (indoor unit) 11.

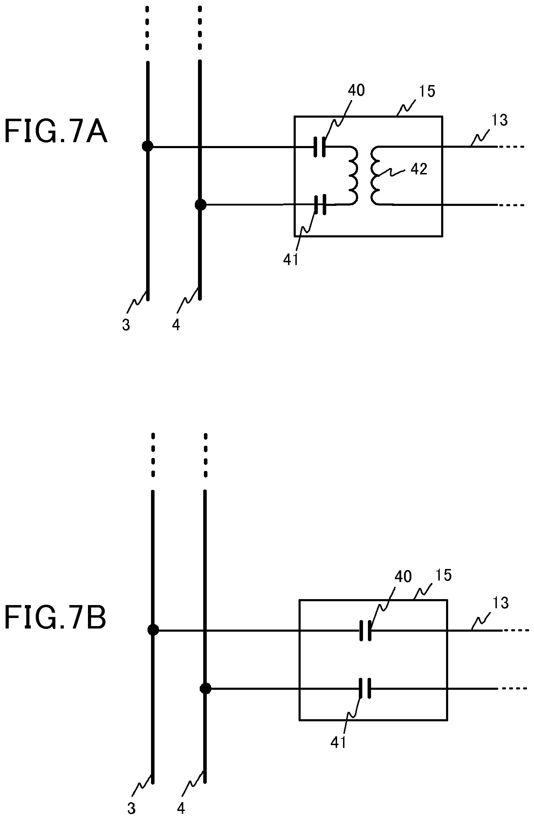

FIGS. 7A and 7B illustrate a circuit configuration of the remote controller wire connector 15. As illustrated in FIGS. 7A and 7B, the circuit configuration of the remote controller wire connector 15 is almost the same as the circuit configuration of the connector 24 in FIGS. 4A and 4B.

More specifically, as illustrated in FIGS. 7A and 7B, the remote controller wire connector 15 includes the high-voltage capacitor 40 that is disposed between the communication wire 3 and aftermentioned modulator 51 and demodulator 52 and is able to withstand voltages up to 250 V, for example, as well as the high-voltage capacitor 41 that is disposed between the shared wire 4 and ground and is able to withstand voltages up to 250 V. The capacitors 40, 41 make a capacitor connection.

As illustrated in FIG. 7A, the remote controller wire connector 15 also includes the high-voltage transformer 42 that has a coil that connects one end of the capacitor 40 and one end of the capacitor 41 and a coil that connects the modulator 51 and demodulator 52 to ground, and is able to withstand voltages up to 250 V, for example. In this case, also, the withstand voltages of the capacitors 40, 41 and transformer 42 may be more than or equal to a maximum voltage of the AC power source 1.

This remote controller wire connector 15 prevents a circuit failure in the remote controller 12 even if the triplex cable 5 is wrongly wired. The capacitors 40, 41 and transformer 42 also function as insulators that insulate the remote controller 12 from the AC power source 1 to prevent high current from flowing into the remote controller 12.

The DC power source 16 supplies DC power to the remote controller 12 via the remote controller wire 13. That is, to the remote controller 12 is supplied DC power via the remote controller wire 13. This insulation between the remote controller 12 and the AC power source 1 ensures security for a person who operates the remote controller 12.

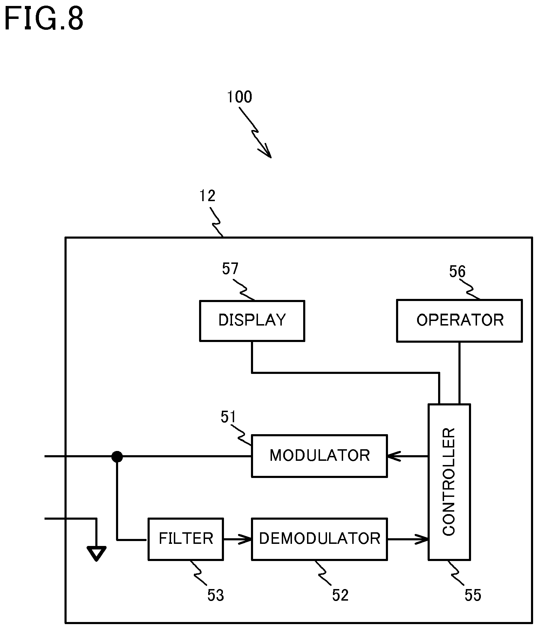

FIG. 8 illustrates an internal configuration of the remote controller 12. As illustrated in FIG. 8, the remote controller 12 includes the modulator 51, the demodulator 52, a filter 53, a controller 55, an operator 56 and a display 57.

The modulator 51 modulates a voltage signal corresponding to transmission data inputted from the controller 55 and outputs the signal as a voltage signal between the communication wire 3 and the shared wire 4. The outputted voltage signal is outputted via the remote controller wire connector 15 to the communication wire 3 and shared wire 4.

The demodulator 52 demodulates a voltage signal based on the potential difference between the communication wire 3 and the shared wire 4, and outputs the signal to the controller 55. The filter 53 extracts only a component of a frequency band near a carrier from a signal outputted from the remote controller wire connector 15, and outputs a signal corresponding to the component to the demodulator 52.

The controller 55 includes a CPU and a memory (both are not illustrated). The controller 55 integrally controls the entire remote controller 12 by the CPU's executing a program stored in the memory. The operator 56 includes an operation panel or the like to receive an operation input from the user and outputs a signal corresponding to the operation input to the controller 55. The display 57 displays an image corresponding to a result of processing performed by the controller 55.

The controller 55 employs a modulated-carrier system as a modulation system to be used for communication. That is, like the controller 25 in Embodiment 1, the controller 55 receives, as incoming data, serial data corresponding to a voltage signal demodulated in the demodulator 51 if the serial data includes the address of an apparatus to which the controller 55 belongs, and outputs transmission data that includes a destination address to the modulator 51 while the voltage between the communication wire 3 and the shared wire 4 is not changing.

Comparison of FIG. 8 and FIG. 2 shows that the circuit configuration of the remote controller 12 that includes the controller 55, modulator 51, demodulator 52 and filter 53 is the same as the circuit configuration of the air conditioning apparatus (outdoor unit) 10 in FIG. 2 that includes the controller 25, modulator 21, demodulator 22 and filter 23.

The remote controller 12 is connected to the communication wire 3 and shared wire 4 via the remote controller wire connector 15. In the present embodiment, the remote controller 12 is also able to perform one-on-one data exchange with the air conditioning apparatus (outdoor unit) 10 and air conditioning apparatus (indoor unit) 11. The remote controller 12 uses this data exchange to remotely control the air conditioning apparatus (outdoor unit) 10 and air conditioning apparatus (indoor unit) 11.

As has been described in detail, in the present embodiment, the remote controller 12 is directly able to communicate with the air conditioning apparatus (outdoor unit) 10 and air conditioning apparatus (indoor unit) 11, thereby reducing time to be required for communication, minimizing communication delay and speeding up the response to an operation input.

In the present embodiment, a modulation system in the remote controller 12 is a modulated-carrier system. The capacitors 40, 41 block power supply voltage and/or the like and make only a modulated signal pass through. This enables the remote controller wire connector 15 to have a high insulation.

The remote controller wire connector 15 is able to connect, in parallel, a plurality of remote controllers 12. Therefore, the production cost is lower than the case in which each of the remote controllers 12 has an insulation characteristic.

The remote controller 12 may receive power from the AC power source 1, but may reduce power consumption. Cost is further reduced where a power supply circuit is provided that is able to receive DC power obtained by superimposing a small amount of DC power supplied from the DC power source 16 on the remote controller wire 13 than where a power supply circuit is provided that generates power for the remote controller 12 from a large amount of power supplied from the AC power source 1.

The remote controller wire connector 15 may be disposed within the air conditioning apparatus (outdoor unit) 10 and air conditioning apparatus (indoor unit) 11. Alternatively, the remote controller wire connector 15 may be built in the remote controller 12.

### Embodiment 3

Next, Embodiment 3 of the present invention will be described.

The present embodiment is suitable in the case where a modulation system for the remote controller wire 13 of the remote controller 12 and a modulation system for the communication wire 4 or the like are different. The air conditioning system 100 according to the present embodiment is different from the air conditioning system 100 according to Embodiment 2 in a configuration of the remote controller wire connector 15.

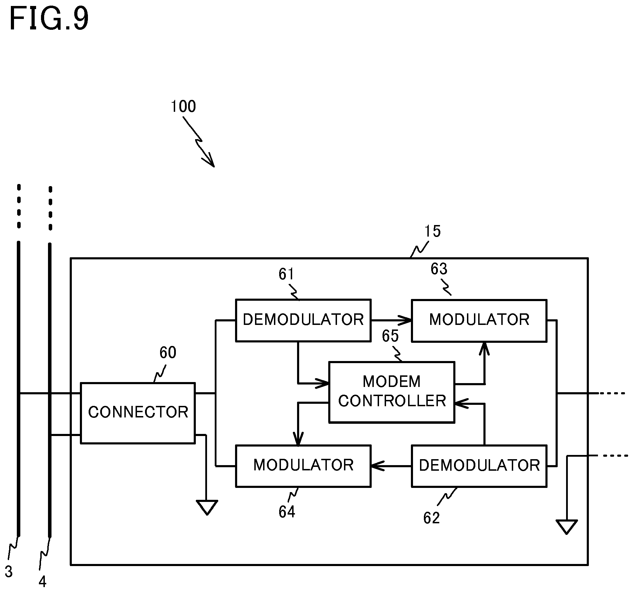

FIG. 9 illustrates a configuration of the remote controller wire connector 15. As illustrated in FIG. 9, the remote controller wire connector 15 includes a connector 60, demodulators 61, 62, modulators 63, 64 and a modem controller 65.

The connector 60 has the same circuit configuration as that of the remote controller wire connector 15 according to Embodiment 2. The connector 60 has a high insulation against the AC power source 1, and the withstand voltage of the connector 60 is set to be extremely high so as to withstand at least a maximum voltage of the AC power source 1.

A demodulator 61, as a first demodulator, demodulates a modulated signal that is a voltage signal based on the potential difference between the communication wire 3 and the shared wire 4 in a modulation and demodulation system (a first demodulation system) for a signal that is transmitted through the communication wire 3. A demodulator 62, as a second demodulator, demodulates a modulated signal outputted from the remote controller 12 in a modulation and demodulation system (a second demodulation system) for a signal that is transmitted through the remote controller wire 13.

A modulator 63, as a first modulator, modulates the voltage signal demodulated by the demodulator 61 in a second modulation and demodulation system and outputs the modulated signal to the remote controller 12. A modulator 64, as a second modulator, modulates the signal demodulated in the demodulator 62 in the first modulation system and outputs the modulated signal to the communication wire 3 and shared wire 4.

The modem controller 65 controls the demodulators 61, 62 and modulators 63, 64 so as to stop output of a modulated signal from the modulator 63 while the demodulator 62 is demodulating a modulated signal and so as to stop output of a modulated signal from the modulator 64 while the demodulator 61 is demodulating a modulated signal.

In this way, the modem controller 65, while modulation or demodulation of either one is performed, stops modulation or demodulation of the other. This prevents collision of transmission data and incoming data in the communication wire 3 and remote controller wire 13, and also avoids a signal loop.

In the present embodiment, the modem controller 65 controls the modulators 63, 64, taking the state of demodulation by the demodulators 61, 62 into consideration. Alternatively, the modem controller 65 may control the demodulators 61, 62, taking the state of modulation by the modulators 63, 64 into consideration.

Various embodiments and modifications are available to the present invention without departing from the broad sense of spirit and scope of the present invention. The above-described embodiments are given for explaining the present invention and do not confine the scope of the present invention. In other words, the scope of the present invention is set forth by the scope of claims, not by the embodiments.

### Industrial Applicability

The present invention is preferable for an air conditioning system that includes an outdoor unit and an indoor unit.

### Reference Signs List

- 1: AC power source
- 2: Power wire
- 3: Communication wire
- 4: Shared wire for power and communication (Shared wire)
- 5: Triplex cable
- 10: Air conditioning apparatus (Outdoor unit)
- 11: Air conditioning apparatus (Indoor unit)
- 12: Remote controller
- 13: Remote controller wire
- 15: Remote controller connector
- 16: DC power source
- 20: Air conditioner
- 21: Modulator
- 22: Demodulator
- 23: Filter
- 24: Connector
- 25: Controller
- 30: Outdoor unit
- 31: Indoor unit
- 32: Remote controller
- 40, 41: Capacitor
- 42: Transformer
- 50: Controller
- 51: Modulator
- 52: Demodulator
- 53: Filter
- 55: Controller
- 56: Operator
- 57: Display
- 60: Connector
- 61, 62: Demodulator
- 63, 64: Modulator
- 65: Modem controller
- 100,101: Air conditioning system

## Claims

1. An air conditioning apparatus (10, 11, 12) connected to a power wire (2), a communication wire (3) and a shared wire for power and communication (4) that are included in a triplex cable (5), the air conditioning apparatus (10, 11, 12) comprising:
a first modulator (21) configured to modulate a first voltage signal corresponding to inputted transmission data and to output the signal as a second voltage signal between the communication wire (3) and the shared wire for power and communication (4);
a first demodulator (22) configured to demodulate a third voltage signal based on the potential difference between the communication wire (3) and the shared wire for power and communication (4) and to output the signal as a demodulated signal;
and **characterized by** comprising:
a connector (24) that comprises a first high-voltage capacitor (40, 41) and is configured to connect the communication wire (3) and the shared wire for power and communication (4) to the first modulator (21) and the demodulator (22) via the first high-voltage capacitor (40, 41) that withstands voltages up to a predetermined level; and
a first controller (25) configured to receive, as incoming data, serial data corresponding to the demodulated signal if the serial data includes an address of the air conditioning apparatus, to monitor the demodulated signal, and to output the transmission data that includes a destination address to the first modulator (21) if the first controller (25) determines that no signal is being transmitted through the communication wire (3).

2. The air conditioning apparatus (10, 11, 12) according to Claim 1, **characterized in that** the connector (24) further comprises a high-voltage transformer (42) and is configured to connect the communication wire (3) and the shared wire for power and communication (4) to the first modulator (21) and the first demodulator (22) via the high-voltage transformer (42) that withstands voltages up to a predetermined level.

3. The air conditioning apparatus (10, 11, 12) according to Claim 1 or 2, **characterized in that** the first modulator (21) modulates the first voltage signal in a modulated-carrier system and the first demodulator (22) demodulates the third voltage signal in the modulated-carrier system.

4. The air conditioning apparatus (10, 11, 12) according to Claim 3, **characterized by** further comprising a filter (23) that is disposed between the first demodulator (22) and the connector (24) and removes harmonic components of AC voltage supplied via the power wire (2) and the shared wire for power and communication (4),
wherein the first modulator (21) modulates the first voltage signal in a higher frequency than harmonics of the AC voltage and the first demodulator (22) demodulates the third voltage signal in a higher frequency than harmonics of the AC voltage.

5. The air conditioning apparatus (10, 11) according to any one of Claims 1 to 4, **characterized in that** the air conditioning apparatus (10, 11) is an outdoor unit (10) or an indoor unit (11) that further comprises an air conditioner (20), the air conditioner (20) using AC power supplied via the power wire (2) and the shared wire for power and communication (4) thereby to perform an air conditioning operation.

6. The air conditioning apparatus (12) according to any one of Claims 1 to 4, **characterized in that** the air conditioning apparatus (12) is a first remote controller (12) that remotely controls an outdoor unit (10) and an indoor unit (11).

7. An air conditioning system (100) **characterized by** comprising:
a triplex cable (5) that comprises a power wire (2), a communication wire (3) and a shared wire for power and communication (4); and
a plurality of air conditioning apparatuses (10, 11, 12) according to any one of Claims 1 to 6.

8. The air conditioning system (100) according to Claim 7, **characterized by** further comprising:
a second remote controller (12); and
a connection device (15) configured to connect the second remote controller (12), the communication wire (3) and the shared wire for power and communication (4),
wherein the second remote controller (12) comprises:
a second modulator (51) configured to modulate a fourth voltage signal corresponding to inputted transmission data and to output the modulated signal as a fifth voltage signal between the communication wire (3) and the shared wire for power and communication (4);
a second demodulator (52) configured to demodulate a sixth voltage signal based on the potential difference between the communication wire (3) and the shared wire for power and communication (4) and to output the demodulated signal; and
a second controller (55) configured to receive, as incoming data, serial data corresponding to a seventh voltage signal demodulated in the second demodulator (52) if the serial data includes an address of the remote controller (12), and to output the transmission data that includes a destination address to the second modulator (51) if the voltage between the communication wire (3) and the shared wire for power and communication (4) is not changing, and
wherein the connection device (15) comprises a second high-voltage capacitor (40, 41) and is configured to connect the communication wire (3) and the shared wire for power and communication (4) to the second modulator (51) and the second demodulator (52) via the second high-voltage capacitor (40, 41) that withstands voltages up to a predetermined level.

9. The air conditioning system (100) according to Claim 8, **characterized in that** the connection device (15) further comprises a high-voltage transformer (42) and is configured to connect the communication wire (3) and the shared wire for power and communication (4) to the second modulator (51) and the second demodulator (52) via the high-voltage transformer (42) that withstands voltages up to a predetermined level.

10. The air conditioning system (100) according to Claim 8 or 9, **characterized in that** the connection device (15) comprises:
a third demodulator (61) configured to demodulate a first modulated signal that is an eighth voltage signal based on the potential difference between the communication wire (3) and the shared wire for power and communication (4) in a first modulation and demodulation system;
a fourth demodulator (62) configured to demodulate a second modulated signal outputted from the second remote controller (12) in a second modulation and demodulation system;
a third modulator (63) configured to modulate a ninth voltage signal demodulated in the third demodulator (61) in the second modulation and demodulation system and to output the modulated voltage signal to the second remote controller (12);
a fourth modulator (64) configured to modulate a tenth voltage signal demodulated in the fourth demodulator (62) in the first modulation and demodulation system and to output the signal as an eleventh voltage signal between the communication wire (3) and the shared wire for power and communication (4); and
a modem controller (65) configured to control so as to stop, while one of the fourth demodulator (62) and third modulator (63) is operating, operation of the other, and so as to stop, while one of the third demodulator (61) and fourth modulator (64) is operating, operation of the other.

## Patentansprüche

1. Klimaanlage (10, 11, 12), die mit einer Stromleitung (2), einer Kommunikationsleitung (3) und einer gemeinsamen Leitung für Strom und Kommunikation (4) verbunden ist, die in einem Triplex-Kabel (5) enthalten sind, wobei die Klimaanlage (10, 11, 12) umfasst:
einen ersten Modulator (21), der eingerichtet ist, ein erstes Spannungssignal, das den eingegebenen Übertragungsdaten entspricht, zu modulieren und das Signal als ein zweites Spannungssignal zwischen der Kommunikationsleitung (3) und der gemeinsamen Leitung für Strom und Kommunikation (4) auszugeben;
einen ersten Modulator (22), der eingerichtet ist, ein drittes Spannungssignal zu demodulieren auf Grundlage der Potentialdifferenz zwischen der Kommunikationsleitung (3) und der gemeinsamen Leitung für Strom und Kommunikation (4) und das Signal als ein demoduliertes Signal auszugeben;
und **gekennzeichnet durch** umfassend:
einen Verbinder (24), der einen ersten Hochspannungskondensator (40, 41) umfasst und eingerichtet ist, die Kommunikationsleitung (3) und die gemeinsame Leitung für Strom und Kommunikation (4) mit dem ersten Modulator (21) und dem Demodulator (22) über den ersten Hochspannungskondensator (40, 41), der Spannungen bis zu einem vorherbestimmten Niveau standhält, zu verbinden; und
eine erste Steuerungseinheit (25), die eingerichtet ist, als eingehende Daten serielle Daten, die dem demodulierten Signal entsprechen, zu empfangen, falls die seriellen Daten eine Adresse der Klimaanlage enthalten, das demodulierte Signal zu überwachen und die Übertragungsdaten, die eine Zieladresse enthalten, an den ersten Modulator (21) auszugeben, falls die erste Steuerungseinheit (25) bestimmt, dass kein Signal über die Kommunikationsleitung (3) übertragen wird.

2. Klimaanlage (10, 11, 12) nach Anspruch 1, **dadurch gekennzeichnet, dass** der Verbinder (24) ferner einen Hochspannungstransformator (42) umfasst und eingerichtet ist, die Kommunikationsleitung (3) und die gemeinsame Leitung für Strom und Kommunikation (4) mit dem ersten Modulator (21) und dem ersten Demodulator (22) über den Hochspannungstransformator (42), der Spannungen bis zu einem vorherbestimmten Niveau standhält, zu verbinden.

3. Klimaanlage (10, 11, 12) nach Anspruch 1 oder 2, **dadurch gekennzeichnet, dass** der erste Modulator (21) das erste Spannungssignal in einem Modulierter-Träger-System moduliert und der erste Demodulator (22) das dritte Spannungssignal im Modulierter-Träger-System demoduliert.

4. Klimaanlage (10, 11, 12) nach Anspruch 3, **dadurch gekennzeichnet, dass** diese ferner einen Filter (23) umfasst, der zwischen dem ersten Demodulator (22) und dem Verbinder (24) angeordnet ist und harmonische Komponenten der Wechselspannung entfernt, die über die Stromleitung (2) und die gemeinsame Leitung für Strom und Kommunikation (4) geliefert wird,
wobei der erste Modulator (21) das erste Spannungssignal in eine höhere Frequenz als Harmonische der Wechselspannung moduliert und der erste Demodulator (22) das dritte Spannungssignal in eine höhere Frequenz als Harmonische der Wechselspannung demoduliert.

5. Klimaanlage (10, 11) nach einem der Ansprüche 1 bis 4, **dadurch gekennzeichnet, dass** die Klimaanlage (10, 11) eine Außeneinheit (10) oder eine Inneneinheit (11) ist, die ferner einen Klimatisierer (20) umfasst, wobei der Klimatisierer (20) Wechselstrom nutzt, der über die Stromleitung (2) und die gemeinsame Leitung für Strom und Kommunikation (4) geliefert wird, um dadurch einen Klimatisierungsbetrieb durchzuführen.

6. Klimaanlage (12) nach einem der Ansprüche 1 bis 4, **dadurch gekennzeichnet, dass** die Klimaanlage (12) eine erste Fernsteuerungseinheit (12) ist, die eine Außeneinheit (10) und eine Inneneinheit (11) fernsteuert.

7. Klimatisierungssystem (100), **dadurch gekennzeichnet, dass** es umfasst:
ein Triplex-Kabel (5), das eine Stromleitung (2), eine Kommunikationsleitung (3) und eine gemeinsame Leitung für Strom und Kommunikation (4) umfasst; und
eine Vielzahl von Klimaanlagen (10, 11, 12) nach einem der Ansprüche 1 bis 6.

8. Klimatisierungssystem (100) nach Anspruch 7, **dadurch gekennzeichnet, dass** es ferner umfasst:
eine zweite Fernsteuerungseinheit (12); und
eine Verbindungseinrichtung (15), die eingerichtet ist, die zweite Fernsteuerungseinheit (12), die Kommunikationsleitung (3) und die gemeinsamen Leitung für Strom und Kommunikation (4) zu verbinden,
wobei die zweite Fernsteuerungseinheit (12) umfasst:
einen zweiten Modulator (51), der eingerichtet ist, ein viertes Spannungssignal, das den eingegebenen Übertragungsdaten entspricht, zu modulieren und das modulierte Signal als ein fünftes Spannungssignal zwischen der Kommunikationsleitung (3) und der gemeinsamen Leitung für Strom und Kommunikation (4) auszugeben;
einen zweiten Demodulator (52), der eingerichtet ist, ein sechstes Spannungssignal zu demodulieren auf Grundlage der Potentialdifferenz zwischen der Kommunikationsleitung (3) und der gemeinsamen Leitung für Energie und Kommunikation (4) und das demodulierte Signal auszugeben; und
eine zweite Steuerungseinheit (55), die eingerichtet ist, als eingehende Daten serielle Daten, die einem siebten Spannungssignal entsprechen, das im zweiten Demodulator (52) demoduliert wird, zu empfangen, falls die seriellen Daten eine Adresse der Fernsteuerungseinheit (12) enthalten, und die Übertragungsdaten, die eine Zieladresse enthalten, an den zweiten Modulator (51) auszugeben, falls sich die Spannung zwischen der Kommunikationsleitung (3) und der gemeinsamen Leitung für Strom und Kommunikation (4) nicht verändert, und
wobei die Verbindungseinrichtung (15) einen zweiten Hochspannungskondensator (40, 41) umfasst und eingerichtet ist, die Kommunikationsleitung (3) und die gemeinsame Leitung für Strom und Kommunikation (4) mit dem zweiten Modulator (51) und dem zweiten Demodulator (52) über den zweiten Hochspannungskondensator (40, 41), der Spannungen bis zu einem vorherbestimmten Niveau standhält, zu verbinden.

9. Klimaanlage (100) nach Anspruch 8, **dadurch gekennzeichnet, dass** die Verbindungseinrichtung (15) ferner einen Hochspannungstransformator (42) umfasst und eingerichtet ist, die Kommunikationsleitung (3) und die gemeinsame Leitung für Strom und Kommunikation (4) mit dem zweiten Modulator (51) und dem zweiten Demodulator (52) über den Hochspannungstransformator (42), der Spannungen bis zu einem vorherbestimmten Niveau standhält, zu verbinden.

10. Klimatisierungssystem (100) nach Anspruch 8 oder 9, **dadurch gekennzeichnet, dass** die Verbindungseinrichtung (15) umfasst:
einen dritten Demodulator (61), der eingerichtet ist, ein erstes moduliertes Signal, das ein achtes Spannungssignal ist, zu demodulieren auf Grundlage der Potentialdifferenz zwischen der Kommunikationsleitung (3) und der gemeinsamen Leitung für Strom und Kommunikation (4) in einem ersten Modulations- und Demodulationssystem;
einen vierten Demodulator (62), der eingerichtet ist, ein zweites moduliertes Signal, das von der zweiten Fernsteuerungseinheit (12) ausgegeben wird, in einem zweiten Modulations- und Demodulationssystem zu demodulieren;
einen dritten Modulator (63), der eingerichtet ist, ein neuntes Spannungssignal, das im dritten Demodulator (61) demoduliert wurde, im zweiten Modulations- und Demodulationssystem zu modulieren und das modulierte Spannungssignal an die zweite Fernsteuerungseinheit (12) auszugeben;
einen vierten Modulator (64), der eingerichtet ist, ein zehntes Spannungssignal, das im vierten Demodulator (62) demoduliert wurde, im ersten Modulations- und Demodulationssystem zu modulieren und das Signal als ein elftes Spannungssignal zwischen der Kommunikationsleitung (3) und der gemeinsamen Leitung für Strom und Kommunikation (4) auszugeben; und
eine Modem-Steuerungseinheit (65), die eingerichtet ist zu steuern, während einer von dem vierten Demodulator (62) und dem dritten Modulator (63) in Betrieb ist, Betrieb des anderen zu stoppen, und, während einer von dem dritten Demodulator (61) und dem vierten Modulator (64) in Betrieb ist, den Betrieb des anderen zu stoppen.

## Revendications

1. Appareil de climatisation (10, 11, 12) connecté à un câble d'alimentation (2), à un câble de communication (3) et à un câble partagé d'alimentation et de communication (4), qui sont inclus dans un câble à trois conducteurs (5), l'appareil de climatisation (10, 11, 12) comprenant :
un premier modulateur (21) configuré pour moduler un premier signal de tension correspondant à des données de transmission entrées, et à délivrer en sortie le signal en tant que deuxième signal de tension entre le câble de communication (3) et le câble partagé d'alimentation et de communication (4) ;
un premier démodulateur (22) configuré pour démoduler un troisième signal de tension sur la base d'une différence de potentiel entre le câble de communication (3) et le câble partagé d'alimentation et de communication (4), et pour délivrer en sortie le signal en tant que signal démodulé ;
et **caractérisé en ce qu'**il comprend :
un connecteur (24) qui comprend un premier condensateur à haute tension (40, 41), et qui est configuré pour connecter le câble de communication (3) et le câble partagé d'alimentation et de communication (4), au premier modulateur (21) et au démodulateur (22) par l'intermédiaire du premier condensateur à haute tension (40, 41) qui résiste à des tensions jusqu'à un niveau prédéterminé ; et
un premier contrôleur (25), configuré pour recevoir, en tant que données entrantes, des données sérielles correspondant au signal démodulé si les données sérielles comprennent une adresse de l'appareil de climatisation, pour surveiller le signal démodulé, et pour délivrer en sortie les données de transmission qui comprennent une adresse de destination, au premier modulateur (21) si le premier contrôleur (25) détermine qu'aucun signal n'est transmis par le câble de communication (3).

2. Appareil de climatisation (10, 11, 12) selon la revendication 1, **caractérisé en ce que** le connecteur (24) comprend en outre un transformateur à haute tension (42), et qui est configuré pour connecter le câble de communication (3) et le câble partagé d'alimentation et de communication (4), au premier modulateur (21) et au démodulateur (22) par l'intermédiaire du transformateur à haute tension (42) qui résiste à des tensions jusqu'à un niveau prédéterminé.

3. Appareil de climatisation (10, 11, 12) selon la revendication 1 ou 2, **caractérisé en ce que** le premier modulateur (21) module le premier signal de tension dans un système de modulation de porteuse, et le premier démodulateur (22) démodule le troisième signal de tension dans le système de modulation de porteuse.

4. Appareil de climatisation (10, 11, 12) selon la revendication 3, **caractérisé en ce qu'**il comprend en outre un filtre (23) qui est disposé entre le premier démodulateur (22) et le connecteur (24), et qui élimine les composantes harmoniques de la tension AC fournie par l'intermédiaire du câble d'alimentation (2) et du câble partagé d'alimentation et de communication (4),
où le premier modulateur (21) module le premier signal de tension dans une fréquence supérieure à celle des harmoniques de la tension AC, et le premier démodulateur (22) démodule le troisième signal de tension dans une fréquence supérieure à celle des harmoniques de la tension AC.

5. Appareil de climatisation (10, 11) selon l'une quelconque des revendications 1 à 4, **caractérisé en ce que** l'appareil de climatisation (10, 11) est une unité extérieure (10) ou une unité intérieure (11) qui comprend en outre un climatiseur (20), le climatiseur (20) utilisant l'alimentation AC fournie par l'intermédiaire du câble d'alimentation (2) et du câble partagé d'alimentation et de communication (4), afin d'exécuter de ce fait une opération de climatisation.

6. Appareil de climatisation (12) selon l'une quelconque des revendications 1 à 4, **caractérisé en ce que** l'appareil de climatisation (12) est un premier contrôleur à distance (12) qui commande à distance une unité extérieure (10) et une unité intérieure (11).

7. Système de climatisation (100) **caractérisé en ce qu'**il comprend :
un câble trois conducteurs (5) qui comprend un câble d'alimentation (2), un câble de communication (3), et un câble partagé d'alimentation et de communication (4) ; et
une pluralité d'appareils de climatisation (10, 11, 12) selon l'une quelconque des revendications 1 à 6.

8. Système de climatisation (100) selon la revendication 7, **caractérisé en ce qu'**il comprend en outre :
un second contrôleur à distance (12) ; et
un dispositif de connexion (15) configuré pour connecter le second contrôleur à distance (12), le câble de communication (3) et le câble partagé d'alimentation et de communication (4),
où le second contrôleur à distance (12) comprend :
un deuxième modulateur (51) configuré pour moduler un quatrième signal de tension correspondant à des données de transmission entrées, et à délivrer en sortie le signal modulé en tant que cinquième signal de tension entre le câble de communication (3) et le câble partagé d'alimentation et de communication (4) ;
un deuxième démodulateur (52) configuré pour démoduler un sixième signal de tension sur la base d'une différence de potentiel entre le câble de communication (3) et le câble partagé d'alimentation et de communication (4), et pour délivrer en sortie le signal démodulé ; et
un deuxième contrôleur (55) configuré pour recevoir, en tant que données entrantes, des données sérielles correspondant à un septième signal de tension démodulé dans le deuxième démodulateur (52) si les données sérielles comprennent une adresse du contrôleur à distance (12), et pour délivrer au sortie les données de transmission qui comprennent une adresse de destination, au deuxième modulateur (51) si la tension entre le câble de communication (3) et le câble partagé d'alimentation et de communication (4) ne change pas, et
où le dispositif de connexion (15) comprend un second condensateur à haute tension (40, 41), et qui est configuré pour connecter le câble de communication (3) et le câble partagé d'alimentation et de communication (4), au deuxième modulateur (51) et au deuxième démodulateur (52) par l'intermédiaire du second condensateur à haute tension (40, 41) qui résiste à des tensions jusqu'à un niveau prédéterminé.

9. Système de climatisation (100) selon la revendication 8, **caractérisé en ce que** le dispositif de connexion (15) comprend en outre un transformateur à haute tension (42), et qui est configuré pour connecter le câble de communication (3) et le câble partagé d'alimentation et de communication (4), au deuxième modulateur (51) et au deuxième démodulateur (52) par l'intermédiaire du transformateur à haute tension (42) qui résiste à des tensions jusqu'à un niveau prédéterminé.

10. Système de climatisation (100) selon la revendication 8 ou 9, **caractérisé en ce que** le dispositif de connexion (15) comprend :
un troisième démodulateur (61) configuré pour démoduler un premier signal modulé qui est un huitième signal de tension sur la base de la différence de potentiel entre le câble de communication (3) et le câble partagé d'alimentation et de communication (4) dans un premier système de modulation et de démodulation ;
un quatrième démodulateur (62) configuré pour démoduler un deuxième signal modulé délivré en sortie par le second contrôleur à distance (12) dans un second système de modulation et de démodulation ;
un troisième modulateur (63) configuré pour moduler un neuvième signal de tension démodulé dans le troisième démodulateur (61) dans le second système de modulation et de démodulation, et pour délivrer en sortie le signal de tension modulé, au second contrôleur à distance (12) ;
un quatrième modulateur (64) configuré pour moduler un dixième signal de tension démodulé dans le quatrième démodulateur (62) dans le premier système de modulation et de démodulation, et pour délivrer en sortie le signal en tant que onzième signal de tension entre le câble de communication (3) et le câble partagé d'alimentation et de communication (4) ; et
un contrôleur de modem (65) configuré pour commander, alors que l'un du quatrième démodulateur (62) et du troisième modulateur (63) fonctionne, l'arrêt du fonctionnement de l'autre, et, alors que l'un du troisième démodulateur (61) et du quatrième modulateur (64) fonctionne, l'arrêt du fonctionnement de l'autre.
